Europäisches Patentamt

European Patent Office

Office européen des brevets

(19)

(11) Veröffentlichungsnummer : **0 502 931 B1**

# (12) EUROPÄISCHE PATENTSCHRIFT

(45) Veröffentlichungstag der Patentschrift :
**06.04.94 Patentblatt 94/14**

(21) Anmeldenummer : **91900125.5**

(22) Anmeldetag : **27.11.90**

(86) Internationale Anmeldenummer :
**PCT/AT90/00112**

(87) Internationale Veröffentlichungsnummer :
**WO 91/07881 13.06.91 Gazette 91/13**

(51) Int. Cl.$^5$ : **A23K 1/14,** A23K 1/18,
A23L 1/31

(54) **VERFAHREN ZUR AUFZUCHT UND/ODER MAST VON SCHWEINEN, SOWIE FUTTERMITTELMISCHUNG.**

(30) Priorität : **01.12.89 AT 2744/89**

(43) Veröffentlichungstag der Anmeldung :
**16.09.92 Patentblatt 92/38**

(45) Bekanntmachung des Hinweises auf die Patenterteilung :
**06.04.94 Patentblatt 94/14**

(84) Benannte Vertragsstaaten :
**BE CH DE DK FR IT LI NL**

(56) Entgegenhaltungen :
EP-A- 0 316 683
DE-A- 1 171 249
GB-A- 0 163 628
US-A- 3 868 467
Commonwealth Agricultural Bureaux, abstract 000000000, ONO48-00191, Nutrition Abs. and Rev./Ser. B, A. Burdilov et al.: "Dried potato in the diet for pigs" & Svinovodstvo, Moscow, USSR, No. 6, 1977. pp. 18-19
Commonwealth Agricultural Bureaux, abstract 861481684, ONO56-03213, Nutrition Abs. and Rev.er. B, D. Vasilenko et al.: "Effect of ration composition on growth rate and cannibalism in young pigs", & Svinovodstvo, Moscow, USSR, No. 1, 1986, pp. 27-28
Commonwealth Agricultural Bureaux, Abstract 861488647, ONO56-06438, Nutrition Abs. and Rev./Ser. B, S. Dyrcz et al.: "Some physical properties of liquid feeds used in pig feeding", & Roczniki Naukowe Zootechniki, vol. 11, no. 2, 1984, pp. 143-153

(56) Entgegenhaltungen :
Archiv für Tierernährung, vol. 26, no. 4, 1976, (Berlin, DD), W. Kracht et al.: "Die Verwertung des Eiweisses gemischter Futterrationen beim laktierenden Schwein unter Berücksichtigung des Gehaltes der Rationsproteine an essentiellen Aminosäuren", pp. 257-265, see p. 258
Chemical Abstracts, vol. 93, no. 23, 8 December 1980 (Colombus, Ohio, US), L. Danilevskaya et al.: "Protein-vitamin extracts in animal rations", p. 439, abstract 219589c, & Zhivotnovodstvo 1980, (9), 48-9
Chemical Abstracts, vol. 90, no. 11, 12 March 1979 (Colombus, Ohio, US), R. Karklins et al.: "New biostimulants for raising cattle", p. 470, abstract 85606h, & Latv. PSR Zinat. Akad. Vestis 1978, (12), 123-5
Handbuch der Futtermittel, vol. 3 from Max Becker and Kurt Nehring, 1967, publisher Paul Parey (Hamburg und Berlin, DE), pp. 161, 176-198

(73) Patentinhaber : **Handl, Karl**
**Hauptstrasse 33**
**A-6551 Pians (AT)**

(72) Erfinder : **Handl, Karl**
**Hauptstrasse 33**
**A-6551 Pians (AT)**

(74) Vertreter : Wildhack, Helmut, Dr. Dipl.-Ing. et al
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien (AT)**

## Beschreibung

Die Erfindung betrifft neue Verfahren zur Aufzucht und/oder Mast von Schweinen, welche als Rohstoff für Human-Nahrungsmittelprodukte vorgesehen sind, wobei diese Aufzucht unter Einsatz besonders effektiver Futtermittelmischungen und Fütterungsschemata erfolgt, weiters die genannten Futtermittel, sowie die Herstellung besonders bekömmlicher Nahrungsmittelprodukte des Schweinefleisch-Sektors, insbesondere Speck-, Fleisch- und Schinkenprodukte.

Es ist eine Vielzahl von Methoden zur Zucht von Schweinen bekannt geworden, bei denen auf bestimmte zeitliche Abschnitte der Aufzucht-Folge, Futtermittelgabe, einzelne Komponenten der dargebotenen Futtermittel und deren Kombinationen jeweils einzeln besondere Schwerpunktsinteressen gelegt wurden.

So wird gemäß US-PS 3 868 467 besonderer Wert auf den Gehalt des Futters an Lysin gelegt, gemäß Arch.für Tiernahrung Bd.26, Nr.4, Seiten 257-265 (1976) auf die Gehalte der Rationsproteine an essentiellen Aminosauren bei Einsatz von Erdnußextraktionsschrot und Trockenmagermilch bei der Fütterung laktierender Schweine, gemäß EP-A2-316 683 auf den Gehalt von Magnesiumdipropionat im Mineralanteil eines Futters für Schweine und Geflügel; Chem.Abstr., Bd.93, Nr.23, Seite 439, Nr.219 589c (1980) betrifft besonders den Zusatz von Protein-Vitamin-Extrakten zu Magermilch aufweisendem Futter und die Literaturstelle Chem.Abstr., Bd.90, Nr.11, Seite 470, Nr.85 606h (1979) biostimulierende Zusätze zu Mastfuttermitteln auf Basis eines Vitamin-Mineralstoff-Prämixes. Mit einer Verbesserung der Fleischgüte beschäftigt sich die nicht auf spezielle Nutztierarten bezogene DE-PS 1 171 249, welche eine Fütterung der Tiere mit einem Grundfutter auf breiter Basis mit Futtergetreiden, Kartoffeln, Soja, Tiermehlen und Mineralstoffen vorsieht, wobei zwingend die Verabreichung einer Kombination von Weizenkeimen und dicksaurer Milch empfohlen wird. In Commonw.Agricult.Bur., Zusammenfassung Nr.861481684 wird eine Fütterung auf Basis von Mais, Gerste, Weizen und Erbsen beschrieben, die durch Verabreichung von gekochten Kartoffeln und Magermilch ergänzt wird. Durch Zugabe von Luzernemehl soll der Kannibalismus gesenkt werden. Aus Becker-Nehring: "Handbuch der Futtermittel (1967) S.1-61 und 176-198 ist eine große Anzahl einzelner Futtermittelkomponenten bekannt und es werden die Vorteile einer auf Getreide und gesäuerter Magermilch basierenden Kombination für Aufzucht und Fleischqualität hervorgehoben. Über Probleme der Rohrleitungsförderung von fließfähigen Futtermittelgemischen mit einer Mehrzahl von Komponenten wie Kartoffeln, Luzerne, Zuckerrübenkonzentraten und saurer Magermilch berichtet Commonw.Agricult.Bur., Zusammenfassung Nr. 861488647. Schließlich ist aus Commonw.Agricult.Bur., Zusammenfassung Nr. 00000N098-00191 der Einsatz von Trockenmagermilch in Futtermitteln breiter Basis bekanntgeworden und aus der DE-OS 1 692 456 ein Verfahren zur Herstellung von auf mit Milchsäurebakterien behandelter Magermilch basierendem Trockenmilchpulver als tiergesundheitsfördernder Futtermittelzusatz.

Im Rahmen des wachsenden Interesses an ökologischen Fragen ist in den letzten Jahren insbesondere den Lebensmitteln auf Getreide- und Fleischbasis auch vom Massen-Konsumenten immer größere Aufmerksamkeit gewidmet worden, wobei an natürlichen Geschmack und Geruch, höhere Bekömmlichkeit, Verträglichkeit und Verdaulichkeit ebenso wie an eine Freiheit der Lebensmittel von Rückständen landwirtschaftlicher Hilfsstoffe, wie insbesondere Hormonen, Medikamenten, Chemikalien und Schädlingsbekämpfungsmitteln zunehmende Anforderungen gestellt werden.

Die Erfindung hat sich die Aufgabe gestellt, den Forderungen nach einer Herstellung naturnaher Produkte bei gleichzeitigem Einsatz von dem angesprochenen Massenkonsum gerechtwerdenden agroindustriellen Produktionsweisen nachzukommen und - wie oben schon näher angegeben - Verfahren zu entwickeln, die es zum ersten Mal ermöglichen, Produkte des Schweinefleisch-Sektors auf den Lebensmittelmarkt zu bringen, die einer steigenden Nachfrage einerseits und den obenangeführten neuen Qualitätsvorstellungen des Käufers andererseits voll zu entsprechen imstande sind.

Heute immer noch in weitaus überwiegendem Ausmaß angewandte Haltungs- und Mastmethoden auf dem Schweinesektor basieren im wesentlichen auf Futtermitteln mit hohen Anteilen an Mais, sowie weiteren Futtergetreiden, z.B.Gerste, Roggen, weiters Kleie, dann Eiweißfuttermittel, wie Sojaschrot, Ölsaaten-Extraktionschrot, Hülsenfrüchte, z.B.Erbsen, in den meisten Fällen zusätzlich auch Tier-, Blut- und Fischmehl, weiters Kleie, sowie Mineralstoffe und Spurenelementspendern, wobei der zu verfütternden Tiernahrung zur Verhinderung von Produktionsausfällen, zur Prduktionssteigerung und zur Erreichung möglichst hoher Homogenität der Schlachtgewichte und des Fett-Fleisch-Verhältnisses, Medikamente und Wachstumsförderer auf chemischer, antibiotischer und/oder mikrobieller Basis meist schon von vornenerein zugesetzt sind. Bei Anzeichen drohender Erkrankung von Einzeltieren und der Gefahr einer damit verbundenen Infektion eines gesamten Zuchtbestandes wird sofort durch Gabe von Antibiotika bzw. Arzneimitteln gegengesteuert, die auf diese Weise behandelten Tiere verbleiben jedoch weiterhin im Produktionsprozeß. Es zeigte sich, daß sich mit dieser herkömmlichen Art von agroindustrieller Massenproduktion zwar gewaltige Produktionssteigerungen bei gleichzeitig sinkendem manuellen Aufwand erreichen ließen, die Qualität der damit erzielten Lebensmittel-Rohstoffe und insbesondere der daraus durch Weiterverarbeitung gewonnenen Produkte, wie Speck-, Fleisch-, Schinken-, Wurstwaren u.dgl., hinsichtlich Konsistenz, Eigengeschmack und Bekömmlichkeit jedoch im steigenden Maß zu wünschen übrig ließ.

Die vorliegende Erfindung soll unter Beibehaltung eingeführter und bewährter, moderner Produktionsmethoden und unter Bedachtnahme auf die Erhaltung gewachsener Agrarstrukturen letztlich die Herstellung von Human-Nahrungsmitteln auf Basis von Schweinefleisch mit den neuen Konsumenten-Erwartungen entsprechendem, tatsächlich natürlichem Geschmack sowie verbesserter Verträglichkeit und Bekömmlichkeit ermöglichen.

Dementsprechend ist Gegenstand der Erfindung ein neues Verfahren zur Aufzucht und/oder Mast von Schweinen zur Herstellung von Muskel-, Fleisch-, Speck-, Fett-, Organ- und Gewebsteilen dieser Tiere für eine Weiterverarbeitung zu Human-Nahrungsmittel-Produkten, insbesondere Speck-, Fleisch-, Schinken- und Wurstprodukten, wobei die Tiere mit einem Grundfutter mit Getreide- und Futterpflanzen-Basis mit Erbsen und Luzernen sowie gesäuerter Milch und weiters Futtermineralstoffen und/oder Aminosäuren und/oder Vitaminen versorgt werden, das dadurch gekennzeichnet ist, daß zum Erhalt von Fremdstoffrückstands-Freiheit, Wohlgeschmack und hoher Bekömmlichkeit der obengenannten Produkte die Tiere mit einer Futtermittelmischung mit einer von Hormonen, chemischen, mikrobiellen, antibiotischen, wachstums- und leistungsfördernden, Mitteln sowie von Arznei-Mitteln freigehaltenen Basismischung, welche als Hauptkomponenten, jeweils bezogen auf 100 Gew.-%,

20 bis 50 %, vorzugsweise 30 bis 40 %, Gerstenschrot,

20 bis 50 %, vorzugsweise 25 bis 40 %, Roggenschrot,

10 bis 25 %, vorzugsweise 12 bis 20 %, Erbsenschrot,

5 bis 15 %, vorzugsweise 8 bis 12 %, Weizen- und/oder Roggenkleie,

bevorzugt zusätzlich

0,5 bis 8 %, vorzugsweise 2 bis 6 %, Luzernegrünmehl,

- und jeweils ergänzend auf 100 Gew.-% Basismischung, Mineralstoffe, Spurenelemente bzw. -geber, Aminosäuren, Vitamine und/oder Trägerstoffe enthält,
- und in Kombination mit der genannten Basismischung mit dem Ein- bis Dreifachen von deren Menge zusätzlich dicksaurer Magermilch und/oder Buttermilch gefüttert werden, wobei pro Tier bei 23 (± 20%) kg bis 105 (± 10%) kg Lebendgewicht innerhalb von 15 (± 10%) Wochen in - von 1,1 (± 10%) kg als Tagesration ausgehend - um 0,1 bis 0,2 (jeweils±10%)kg pro Woche steigenden Tagesmengen eine wie oben angegebene Futtermittel-Basismischung zusammen mit - in bis zum Ende der 12 (± 10%)ten Aufzuchtswoche etwa gleichbleibenden Mengen - Tagesrationen von 3 (± 10%) l und danach bis zum Mastende auf 1 (± 10%)l sinkenden Mengen dicksaure Mager- und/oder Buttermilch verfüttert wird, wobei erst ab Beginn der 13 (± 10%)ten Woche, in jeweils auf insgesamt 3 (± 10%)l Gesamtflüssigkeit ergänzenden Mengen Wasser verabreicht wird.

Der wesentliche Eiweißlieferant der neuen Aufzucht wird also durch hochwertiges Protein zur Verfügung stellende und keinerlei Eigengeschmacks- und -geruchs-Rückstände - wie sie von Tiermehlen und Ölkuchen bekannt sind - hinterlassende, durch Säuerung auch Infektionsgefahr hintanhaltende Mager- bzw. Buttermilch gebildet. Kleie und Luzerne bilden vornehmlich Faserstofflieferanten.

Es hat sich erwiesen, und entsprechende Reaktionen von Geschmacks-Tests haben dies bestätigt, daß mit der neuen, auf Basis einer von Mais und Sojaschrot sowie Fisch- und Tiermehlen unabhängigen Futtermittelmischung arbeitenden Zucht, bei welcher weiters ein Ausschluß von Gaben der heute üblicherweise routinemäßig zugesetzten Wachstumförderer, und auch Arzneimittel vorgesehen ist, eine Rohstoffbasis für die Lebensmittel, wie insbesondere Speck-, Räucherspeck, Schinken luftgetrocknet oder geräuchert, Bündnerfleisch, Wurst- und Dauerwurst-Brät, aber auch Innereien, wie z.B. Leber für Aufstriche und Pasteten u.dgl., sowie Sülze-Produkte erzielt wird, welche vom Konsumenten erwartete als angenehm und kernig empfundene Kau- und Zubereitungs-Konsistenz, Fremdgeschmacks-Freiheit und wesentlich weniger verdauungsbelastende Eigenschaften aufweist als entsprechende, unter Anwendung heute üblicher Mastmethoden produzierte Lebensmittel des Schweinefleisch-Sektors. Dazu ist zu bemerken, daß bei Schweinen bei Verabreichung von Fette in größeren Anteilen enthaltenden Futtermitteln, diese Fette im wesentlichen unverändert in die körpereigene Fettsubstanz eingebaut werden, womit die Fütterung direkt auf die Beschaffenheit und Güte des Fettgewebes, insbesondere Specks, durchschlägt. Bei der erfindungsgemäßen Kost ist der Körper des Tieres gezwungen, selbst aus den Kohlehydraten körpereigene und damit schweinspezifische Fettsubstanz zu produzieren. Darüber hinaus kann auf aufwendige Importe nichtinländischer Futtermittel und Zusätze, wie insbesondere gesondertes Eiweißfutter, z.B. Sojaschrot, Ölsaaten-Extraktionsschrot, Fischmehl u.dgl., verzichtet werden und es können auf Basis von inländischen Agrarprodukten, also gesundem, unverdorbenem Pflanzenmaterial und insbesondere von Neben- und Überschußprodukten - es sei hier besonders auf den Einsatz der Magermilch hingewiesen Lebensmittel mit ausgezeichneter Qualität und Konsumakzeptanz produziert werden.

Bei strikter Einhaltung des erfindungsgemäß vorgesehenen neuen Fütterungs-Schemas unter Einsatz der neuen Futtermittel-Zusammensetzung innerhalb der angegebenen Grenzen lassen sich Fleisch-zu-Fettgewebs-Verhältnis sowie Lebendgewichts-Zunahme der Tiere bei - selbst unter schwierigen Umgebungs-Bedingungen - minimierten krankheitsbedingten Ausfällen optimieren, z.B. problemlos die höchste Güteklasse, z.B. "EE" der Güteklasse-Verordnung zum österreichischen Qualitätsklassengesetz 1979 erreichen und als Folge der hochwertigen Eiweißgaben mit der Magermilch werden geschmacklich und konsistenzmäßig besonders hochstehende Schweinefleischprodukte erzielt. Mit dem neuen Verfahren ist selbstverständlich weiters das Auftreten von minderqualitativen "PSE-(pale-soft-exudative)"-Fleisch völlig ausgeschlossen.

In innigem Konnex mit dem neuen Aufzucht- und Mastverfahren unter Einsatz von auf dieses abgestimmten Futtermitteln steht das wesentliche Ziel der Erfindung, nämlich zu Muskel-, Fleisch-, Speck-, Fett-, Organ- und Gewebsteilen von Mastschweinen, sowie von aus diesen Rohstoffen durch Weiterverarbeitung gewonnenen, qualitativ hochstehenden Human-Nahrungsmittel-Produkten, insbesondere Speck-, Fleisch-, Schinken- und Wurstprodukten zu gelangen.

Es ist also zur Erreichung hoher Endprodukt-Qualität wesentlich, daß zum Erhalt von Fremdstoffrückstands-Freiheit, Wohlgeschmack und hoher Bekömmlichkeit der genannten Produkte die Tiere unter Einsatz der obengenannten Futtermittelmischungen unter Ausschluß absichtlicher Gaben von Hormonen, wachstumsfördernden Mitteln und Arzneimitteln einem Aufzucht- und/oder Mast-Verfahren, wie es in seiner Ausgestaltung oben beschrieben ist, unterworfen werden, wobei es weiters vorteilhaft ist, daß im Verlaufe der Aufzucht und-/oder Mast Tiere mit nach dem erfindungsgemäß einzuhaltenden Aufzucht-Schema nicht entsprechender Gewichtszunahme und/oder gesundheitliche Schäden aufweisende und/oder medikamentöser Behandlung unterzogene Tiere ausgeschieden werden.

Durch strikte Einhaltung dieser Vorgangsweise werden die für hohen Konsistenz- und Geschmacks-Standard und ausgezeichnete Bekömmlichkeit der Fleisch-, Schinken- und Speckprodukte unabdingbaren Qualitäten erreicht.

Zusammen mit der o.a.Selektion war es zur Absicherung einer hohen Homogenität der Endproduktsqualität über lange Zeiträume sowie zur Sicherstellung der Befriedigung der gehobenen Konsumentenwünsche von entscheidendem Vorteil, einfache und den Qualitätserfolg sichernde, leicht nachvollziehbare Kriterien und darauf beruhende Tests aufzufinden, durch welche das neue Produktions-Verfahren kontrollmäßig abgestützt wird.

Dementsprechend ist in Ergänzung zur obenbeschriebenen Selektion zusätzlich vorgesehen, daß zum Erhalt von fremdstoffrückstandsfreien Human-Nahrungsmitteln auf Schweinebasis und hier insbesondere von Speck und/oder Schinken mit hohem Wohlgeschmack und hoher Bekömmlichkeit ausschließlich nur solche gemäß dem vorher näher beschriebenen Verfahren gefütterten Schweine einer Weiterverarbeitung zugeführt werden, deren Schlachtgewicht (kalt) 75 bis 100 kg, vorzugsweise 75 bis 85 kg, beträgt, in deren Muskelgewebe 24 Stunden nach Schlachtung der pH-Wert kleiner als 6, insbesondere kleiner als 5,8, ist und bei denen - die von einer Fettprobe aus dem Nacken ermittelte Jod-Zahl nach Hanus höchstens 68 und/oder die einfacher ermittelbare Fettzahl (nach Prabucki, ETH Zürich) weniger als 58 beträgt.

Unter Weiterverarbeitung ist jede nach dem Schlachtvorgang folgende Behandlungsstufe, so beispielsweise das Teilen als unmittelbar nächste Stufe, welches die Voraussetzung für die weiteren Schritte der Verarbeitung bildet, zu verstehen.

Gemäß einer auf der oben beschriebenen erfindungsgemäßen Aufzucht von Schweinen basierenden, vorteilhaften Ausgestaltungsform ist vorgesehen, daß die Tiere mit einer Futtermittelmischung gefüttert werden, deren Basismischung zusätzlich zu den obengenannten Hauptkomponenten, jeweils bezogen auf Gewicht, als Mineralstoffe und Spurenelemente zumindest eine, vorzugsweise mehrere, insbesondere alle, der Komponenten

| 2 | bis | 3 | % kohlensaurer Futterkalk, |
|---|---|---|---|
| 0,5 | bis | 1,6 | % Calciumphosphat, |
| 0,2 | bis | 0,6 | % Natriumchlorid, |
| 0,002 | bis | 0,01 | % Eisen, |
| 0,005 | bis | 0,015 | % Magnesium, |
| 0,003 | bis | 0,01 | % Mangan, |
| 0,003 | bis | 0,007 | % Zink, |

```
0,001    bis 0,002    % Kupfer,
0,00001 bis 0,00002   % Cobalt, jeweils vorzugsweise jedes dieser Elemente
                                  als Sulfat oder Oxid
0,0002   bis 0,0005   % Calciumiodat, und
0,00002  bis 0,00010  % Natriumselenit,
```

- und/oder als Aminosäuren und/oder Vitamine zumindest eine, vorzugsweise mehrere, insbesondere alle, der Komponenten

```
0,1      bis 0,3      % Methionin,
0,01     bis 0,08     % Cholinchlorid,
0,005    bis 0,02     % Vitamin C,
0,001    bis 0,01     % Vitamin E,
0,001    bis 0,003    % Vitamin B_{12} (1g/kg)
0,001    bis 0,005    % Vitamin A500,
0,0005   bis 0,001    % Vitamin B_2,
0,0001   bis 0,001    % Vitamin B_6,
0,0001   bis 0,0006   % Vitamin K_3,
0,0001   bis 0,0005   % Vitamin D_3,
0,00005  bis 0,0002   % Vitamin B_1,
0,00001  bis 0,0001   % Folsäure,
0,0004   bis 0,0015   % Calciumpanthothenat,
0,001    bis 0,005    % Niacin und
0,0001   bis 0,001    % Biotin
```

enthält.

Bei Einhaltung der angegebenen Mengenverhältnisse der Mineralstoffe, Spurenelemente und Vitamine sind ein hoher Gesundheitsstandard der Tiere, optimales Fleisch-zu-Speck-Verhältnis sowie eine verarbeitungs- und geschmackfreundliche Konsistenz des Fleisch- und Fettgewebes der Tiere gewährleistet.

Wenn man den Tieren gemäß einer insbesondere im Hinblick auf die Endprodukts-Qualität besonders produktionsgünstigen Variante der erfindungsgemäßen Aufzucht und/oder Mast eine Fütterungs-Zubereitung mit gekochten Kartoffeln verabreicht, die dadurch charakterisiert ist, daß sie eine Basismischung, welche, jeweils bezogen auf 100 Gew.-%

30 bis 70 %, vorzugsweise 45 bis 55 %, Futtererbsenschrot,
10 bis 30 %, vorzugsweise 15 bis 25 %, Roggenschrot,
5 bis 25 %, vorzugsweise 10 bis 20 %, Gerstenschrot,
1 bis 12 %, vorzugsweise 3 bis 7 %, Weizen- und/oder Roggenkleine, bevorzugt
0,5 bis 10 %, vorzugsweise 3 bis 7 %, Luzernegrünmehl,

- und weiters Mineralstoffe, Spurenelementgeber, Aminosäuren und/oder Vitamine enthält,
- sowie vorzugsweise in Kombination mit dieser Basismischung zusätzlich zumindest etwa das Einfache, vorzugsweise das 2- bis 8-Fache von deren Menge aufgeschlossene, vorzugsweise gedämpfte, Kartoffel und
- das 1- bis 8-Fache, vorzugsweise das 2- bis 2,5-Fache, der Menge der Basismischung Magermilch und/oder Buttermilch, aufweist bzw. in einer Kombination verfüttert bzw. verabreicht wird,

wobei den Tieren von einem Einstellgewicht von 20 bis 25 kg an bis zum Mastende bei 100 bis 110 kg pro Tier jeweils 1 (± 20%) kg der oben angegebenen Futtermittel-Basismischung verabreicht werden, wobei bis zu einem Lebendgewicht von 40 (± 10%) kg jeweils zusätzlich 2 (± 10%) l, und ab 40 (± 10%) kg Lebendgewicht bis Mastende 2,5 (± 10%) l pro Tag dicksaure Mager- und/oder Buttermilch, sowie vom Mastbeginn an in von 2 (± 10%) kg ausgehend steigenden Mengen gedämpfte Kartoffel beigegeben werden, und wobei die Steigerung der Kartoffelgaben in dem Maß erfolgt, welche Menge davon die Tiere innerhalb von insgesamt 2 mal 30 (± 10%) Minuten pro Tag aufnehmen, ist einerseits auch in klimatisch benachteiligten Gebieten, die einen Kartoffelbau noch zulassen, eine wesentliche Basis für die Mast sicherstellt, anderseits ist die hohe Geschmacks- qualität von Fleisch von mit Kartoffeln gefütterten Tieren dem Kenner schon immer ein Begriff gewesen, die Geschmacks-Feinheit wird durch die Mager- bzw. Buttermilch-Zufütterung noch weiter angehoben. Günstigerweise ist bei der gemäß der ebenbeschriebenen Variante vorgesehenen Gabe von Kartoffeln, die Futtermittelmischung so einzustellen, daß eine Basismischung verfüttert wird, welche die weiter oben schon angeführten Mineralstoffe, Spurenelemente, Aminosäuren und/oder Vitamine sowie zusätzlich 0,2 bis 0,8 Gew.-%, vorzugsweise 0,4 bis 0,6 Gew.-%, Lysin enthält.

Im Sinne der Förderung besonderer Qualität ist es von wesentlichem Vorteil, auch bei der Fütterung unter Verabreichung von Kartoffeln eine Selektion der Tiere während der Zucht und Mast nach den oben schon genannten Kriterien der geregelten Gewichtszunahme und der Gesundheit und Medikamentenfreiheit der Tiere vorzunehmen.

Im Sinne der angestrebten Erreichung von Spitzenqualität ist es auch bei Tieren aus der variierten Mast besonders wichtig und vorteilhaft, die Kette der Produktions-Kontrolle und -Steuerung bis zum Vorliegen der für eine Weiterverarbeitung zu diversen Fleisch-, Speck-, Schinken- und Wurstprodukten vorgesehenen Ausgangsprodukte fortzusetzen und nach erfolgter Schlachtung nur solche Tiere dieser Endverarbeitung zuzuführen, deren Schlachtgewicht (kalt) 75 bis 100 kg, insbesondere 75 bis 85 kg, beträgt, in deren Muskelgewebe 24 Stunden nach Schlachtung der pH-Wert kleiner als 6, insbesondere kleiner als 5,8, ist und bei denen die von einer Fettprobe aus dem Nacken ermittelte Jod-Zahl nach Hanus höchstens 68 und/oder die Fettzahl (nach Prabucki) weniger als 58 beträgt.

Die angestrebten Zucht- und Endprodukts-Qualitätserfolge können auf besonders günstige Weise gesichert werden, wenn gemäß einer bevorzugten Variante den Schweinen die oben pro Tag und Tier angegebenen Futtermittel-Mengen jeweils in zwei Tagesrationen verfüttert werden.

Eine genaue Steuerung der Aufzucht bzw. Mast der Tiere und damit auch der Qualität der aus ihnen letztlich gewonnenen Lebensmittel kann mit Vorteil erreicht werden, wenn gemäß einer besonderen Ausgestaltungsvariante der Mast den Tieren zusätzlich zur Futtermittel-Basismischung und Mager- und/oder Buttermilch in Abänderung der obengenannten Vorgangsweise jeweils bei Stufen von 40, 60, 70, 80 und 100 (jeweils ± 10%) kg Lebendgewicht jeweils in ansteigenden Mengen innerhalb einer Stufe 3,4,5, 6 und 7 (jeweils ± 10%)kg gedämpfte Kartoffel pro Tag verfüttert werden.

Einen ganz wesentlichen Faktor bei der Erzielung sowohl konsistenzmäßig als auch geschmacks- und aromamäßig höchsten Ansprüchen gerecht werdende Qualitäten kann - wie gefunden wurde - eine sich auf ganz wenige Klassen von Grundnahrungsstoffen hoher Qualität stützende Ernährung der Tiere darstellen. Dementsprechend ist es von wesentlichem Vorteil, wenn die Fütterung der Tiere unter Ausschluß von Eiweißen (bzw. Proteinen) und Fetten aus anderen als den oben jeweils genannten Futtermittel-Komponenten pflanzlichen und/oder tierischen Ursprungs vorgenommen wird.

Weiterer Gegenstand der Erfindung ist die Herstellung von Muskel-, Fleisch-, Speck-, Fett-, Organ- und Gewebsteile von Schweinen für eine Weiterverarbeitung zu Human-Nahrungsmittel-Produkten, insbesondere Speck-, Fleisch-, Schinken- und Wurstprodukten selbst, wobei zur Erreichung der oben ausführlich beschriebenen Qualität nach den weiter oben beschriebenen erfindungsgemäßen Aufzucht- und/oder Mast-Verfahren und deren Varianten vorgegangen wird. Dabei werden zum besonderen Vorteil für die Endprodukts-Qualität bevorzugt die oben näher spezifizierten Kriterien der Selektion während der Zucht und bis zur Schlachtung beachtet. Dies gilt in noch höherem Maße für die Sicherstellung hervorragender Endprodukte, sodaß in entscheidend vorteil- hafterweise im Rahmen der Gesamtproduktion den obenangeführten Kriterien der Acidität des Fleisches und der Iod- bzw. Fettzahl des Fettanteils besonders hohes Augenmerk gewidmet wird.

In unmittelbarem Konnex mit der oben eingehend erläuterten neuen Schweine-Mast stehend ist schließlich eine Futtermittelmischung für die Aufzucht und/oder Mast von Schweinen für Human-Nahrungsmittel-Produkte, auf Basis von Getreide- und Futterpflanzen mit Erbsen und Luzerne, Spurenelementen und/oder Aminosäuren und/oder Vitaminen und mit gesäuerter Milch, die einen weiteren Erfindungsgegenstand darstellt.

Besonders vorteilhaft haben diese die schon im Rahmen des Fütterungsverfahrens oben im einzelnen genau spezifizierten Zusammensetzungen mit oder ohne Kartoffeln, wobei insbesondere im Hinblick auf Staubfreiheit bei der Manipulation und gleichmäßigere Nahrungsaufnahme durch die Tiere die Basismischung des Futtermittels die Form von Pellets aufweist.

Zusammenfassend bringt die vorliegende Erfindung folgende wesentliche Vorteile:

Naturnahe, ausschließlich auf, teilweise sonst schwierig absetzbare, Inlandprodukte unter Vermeidung von Futtermittel-Importen abgestellte Produktionsweise, die sich besonders vorteilhaft im Rahmen von die strikte Einhaltung der obenangegebenen Maßnahmen und Bedingungen sicherstellenden Verträgen mit den einzelnen für Produktion und Zulieferung vorgesehenen Landwirten sichern läßt; durch die Fütterung mit Mager- bzw. Buttermilch unter Ausschluß von Tiermehl, Fischmehl, Blutmehl, Ölkuchen usw. sowie weiters durch die als Variante vorgesehene Zufütterung von Kartoffeln wird der Aufbau besonders hochwertiger, fremdgemschmacks-neutraler und eigengeschmackserhöhender Proteine und Lipide im Tier ermöglicht und zwar bei tier- und ökonomiegerechtem Wachstum. Alle diese Komponenten werden schließlich noch durch den strikten Ausschluß von Gaben von Wachstumsförderern, Hormonen, Medikamenten u.dgl. unterstützt und erbringen schließlich von derartigen Rückständen freie Lebensmittel-Rohstoffe und -Fertigprodukte mit den oben ausführlich beschriebenen Qualitätsmerkmalen, wie Wohlgeschmack und -geruch, hohe Verträglichkeit selbst bei empfindlichen Konsumenten und Bekömmlichkeit ganz allgemein.

Anhand der folgenden Beispiele wird die Erfindung näher erläutert:

Beispiel 1:

Es erfolgt eine Fütterung von Schweinen von einem Einstellgewicht (20 bis 25 kg) bis zu einem Endgewicht von 100 bis 110 kg lebend mit der unten angegebenen speziellen Futtermittelmischung unter Zugabe von dicksaurer Magermilch bzw. frischer Buttermilch.

Für die Futtermittelmischung, die die Basis für die hier durchgeführte Getreidemast mit Magermilch für Schweine bildet, ist folgende Zusammensetzung vorgesehen:

| | |
|---|---|
| 35.00000 | % Gerstenschrot |
| 30, | % Roggenschrot |
| 14, | % Erbsenschrot |
| 11, | % Weizen- und/oder Roggenkleine |
| 5, | % Luzernegrünmehl |
| 2,4 | % kohlensaurer Futterkalk |
| 1,1 | % Mono-Calcium-Phosphat |
| 0,36 | % Viehsalz |
| 0,8 | % Weizenfuttermehl als Trägerstoff |
| 0,2 | % dl-Methionin RS |
| 0,04 | % Cholin Chlorid 50% |
| 0,3 | % Fe-Sulfat, 20% |
| 0,02 | % Mg-Dioxid, 48% |
| 0,0154 | % Mn-Sulfat, 25% |
| 0,01 | % Vitamin C RS |
| 0,008 | % Zn-Oxyd, 78% |
| 0,006 | % Vitamin E, 50% |
| 0,004 | % Cu-Sulfat, 25% |
| 0,002 | % Niacin RS |
| 0,002 | % Vitamin $B_{12}$ (1g/kg) |
| 0,002 | % Vitamin A 500 |
| 0,0008 | % Calcium Panthotenat RS |
| 0,0005 | % Vitamin $B_2$ RS |
| 0,0004 | % Vitamin $B_6$ RS |
| 0,0004 | % Biotin, 2% |
| 0,0003 | % Vitamin $K_3$, RS |
| 0,0003 | % Vitamin $D_3$ 500 |
| 0,00015 | % Calcium Jodat, 60% |
| 0,00015 | % Co-Sulfat, 20% |
| 0,0001 | % Vitamin $B_1$, RS |
| 0,00007 | % Natrium-Selenit, 45% |
| 0,00005 | % Folsäure RS |

Es wurde gemäß folgendem Fütterungsschema vorgegangen mit streng rationierten Tagesangaben:

| Mastwoche | Lebendgewicht | Mischfutter | Magermilch dicksauer+) | Wasser |
|---|---|---|---|---|
| 1. | 23-26 kg | 1,2 kg | 2 l | |
| 2. | 26-30 kg | 1,4 kg | 3 l | |
| 3. | 30-34 kg | 1,5 kg | 3 l | |
| 4. | 34-38 kg | 1,7 kg | 3 l | |
| 5. | 38-43 kg | 1,8 kg | 3 l | |
| 6. | 43-48 kg | 1,9 kg | 3 l | |
| 7. | 48-53 kg | 2,00 kg | 3 l | |
| 8. | 53-58 kg | 2,1 kg | 3 l | |
| 9. | 58-63 kg | 2,2 kg | 3 l | |
| 10. | 63-68 kg | 2,4 kg | 3 l | |
| 11. | 68-74 kg | 2,5 kg | 3 l | |
| 12. | 74-80 kg | 2,6 kg | 3 l | |
| 13. | 80-86 kg | 2,7 kg | 2 l | ca. 1 l |
| 14. | 86-91 kg | 2,8 kg | 1 l | ca. 2 l |
| 15. | 91-96 kg | 2,9 kg | 1 l | ca. 2 l |
| 16. | 96-100 kg | 3,0 kg | 1 l | ca. 2 l |

+) oder frische Buttermilch

Für die Herstellung von Schinken und Speck wurden nach Schlachtung nur jene Tiere ausgesucht, deren Gewebe den oben in der Beschreibung angegebenen Bedingungen hinsichtlich pH-Wert und Jod-Zahl entsprachen. Nach Auslösen der entsprechenden Muskel- und Speckteile wurden unter Anwendung einer schonenden Räuchermethode geräucherter Speck sowie Rauchschinken mit feinem natürlichen durch das Räuchern gehobenen Geschmack, einer vom Feinschmecker bevorzugten zarten Konsistenz und einer auch bei höheren, auf einmal konsumierten Mengen unerwarteter Bekömmlichkeit erzielt.

Beispiel 2:

Schweinen wird eine durch entrahmte dicksaure Milch oder frischer Buttermilch sowie Kartoffeln ergänzte Futtermittelmischung folgen- der Zusammensetzung verfüttert:

| | |
|---|---|
| 50,00000 | % Futtererbsenschrot |
| 20, | % Roggenschrot |
| 15, | % Gerstenschrot |
| 5, | % Luzernegrünmehl |
| 4,8 | % Weizen- und/oder Roggenkleine |
| 2,4 | % kohlensaurer Futterkalk |
| 0,5 | % Lysin RS |
| 0,4 | % Viehsalz |
| 0,3 | % dl-Methionin RS |
| 1,1 | % Mono-Calcium-Phosphat |
| 0,04 | % Cholin Chlorid, 50% |
| 0,03 | % Fe-Sulfat, 20% |
| 0,02 | % Mg-Dioxid, 48% |
| 0,015 | % Mn-Sulfat, 25% |
| 0,01 | % Vitamin C RS |
| 0,008 | % Vitamin E, 50% |
| 0,008 | % Zn-Oxid, 78% |

| | |
|---|---|
| 0,004 | % Cu-Sulfat, 25% |
| 0,002 | % Niacin RS |
| 0,002 | % Vitamin $B_{12}$ 1g/kg |
| 0,002 | % Vitamin A 500 |
| 0,0008 | % Calcium Panthotenat RS |
| 0,0005 | % Vitamin $B_2$ RS |
| 0,0004 | % Vitamin $B_6$ RS |
| 0,0004 | % Biotin, 2% |
| 0,0003 | % Vitamin $K_3$ RS |
| 0,0003 | % Vitamin $D_3$ 500 |
| 0,00015 | % Calcium-Jodat, 60% |
| 0,00015 | % Cobalt-Sulfat, 20% |
| 0,0001 | % Vitamin $B_1$ RS |
| 0,00007 | % Natrium-Selenit, 45% |
| 0,00005 | % Folsäure RS |
| 0,4 | % Weizenfuttermehl als Träger |

Dabei wurde streng gemäß folgender Fütterungsanleitung vorgegangen:

Es erfolgen streng rationierte Tagesangaben von Kraftfuttermittelmischung und Milch. Die Mastschweine erhalten ab einem Einstellgewicht von 20-25 kg täglich je Stück 1 kg der oben angegebenen Futtermittel-Mischung bis Mastende (100-110 kg), dazu täglich je Stück bis 40 kg Lebendgewicht 2 1 dicksaure Magermilch oder frische Buttermilch, ab 40 kg bis Mastende (100-110 kg) täglich 2,5 1. Zu Mastbeginn werden je Stück und Tag 2 kg gedämpfte Kartoffeln vorgelegt und es wird allmählich die Menge gesteigert, welche die Tiere innerhalb von 30 min. aufnehmen (zwei Fütterungen täglich).

Tagesrichtmengen:     40 kg Lebendgewicht ca. 3 kg,
60 kg Lebendgewicht ca. 4 kg,
70 kg Lebendgewicht ca. 5 kg,
80 kg Lebendgewicht ca. 6 kg und
100 kg Lebendgewicht ca. 7 kg gedämpfte Kartoffeln.

Durch die in mehreren Exaktversuchen erprobten Futterzusammensetzungen und die Einhaltung der Fütterungsanleitung wird eine optimale Speckqualität erreicht. 24 Stunden nach der Schlachtung, also vor der Verarbeitung, wird im Schinken der pH-Wert ermittelt, der kleiner als 5,8 sein muß. Außerdem wird von einer Fettprobe aus dem Nacken die Jod-Zahl nach HANUS festgestellt, die unter 68 liegen muß. Das Schlachtgewicht kalt liegt zwischen 75 und 85 kg.

Aus den so erhaltenen Speck- und Fleischteilen wurden auf herkömmliche Weise luftgetrockneter Speck bzw. Schinken hergestellt, welcher sich in analoger Weise zum Ergebnis des Beispiels 1 durch hohe Qualität hinsichtlich Geruch, Geschmack, Konsistenz und Bekömmlichkeit auszeichnete.

Ergebnis beider Beispiele ist also der Erhalt von Schweinefleisch als Ausgangsrohstoff für Rauchfleisch, Schinken, Speck und Würste, das garantiert frei von Rückständen chemischer und antibiotischer Wachstumsförderer, sowie von Arzneimitteln ist. Der Mäster verpflichtete sich vertraglich zur Erreichung dieses Zieles ausschließlich die in den Beispielen und in den Ansprüchen spezifizierten Kraftfuttermischungen unter strikter Einhaltung der Fütterungsanleitung zu verwenden und die Vertragsschweine keiner medikamentösen Behandlung zu unterziehen. Sollte aus gesundheitlichen Gründen eine derartige Behandlung notwendig sein, werden die betroffenen Mastschweine gekennzeichnet und nicht mehr zur Weiterverarbeitung zu Speck und Schinken od.dgl. verwendet.

## Patentansprüche

1. Verfahren zur Aufzucht und/oder Mast von Schweinen, zur Herstellung von Muskel-, Fleisch-, Speck-, Fett-, Organ- und Gewebsteilen dieser Tiere, für eine Weiterverarbeitung zu Human-Nahrungsmittel-Produkten, insbesondere Speck-, Fleisch-, Schinken- und Wurstprodukte, wobei die Tiere mit einem Grundfutter auf Getreide- und Futterpflanzen-Basis mit Erbsen und Luzerne sowie gesäuerter Milch und weiters Futtermineralstoffen und/oder Aminosäuren und/oder Vitaminen versorgt werden, dadurch gekennzeichnet, daß zum Erhalt von Fremdstoffrückstands-Freiheit, Wohlgeschmack und hoher Bekömmlichkeit der obengenannten Produkte die Tiere mit einer Futtermittelmischung mit einer von Hormomen, chemischen, mikrobiellen, antibiotischen, wachstums- und leistungsfördernden Mitteln sowie von Arneimitteln freigehaltenen Basismischung, welche als Hauptkomponenten, jeweils bezogen auf Gewicht

20 bis 50 %, vorzugsweise 30 bis 40 %, Gerstenschrot,

20 bis 50 %, vorzugsweise 25 bis 40 %, Roggenschrot,

10 bis 25 %, vorzugsweise 12 bis 20 %, Erbsenschrot,

5 bis 15 %, vorzugsweise 8 bis 12 %, Weizen und/oder Roggenkleie, bevorzugt zusätzlich

0,5 bis 8 %, vorzugsweise 2 bis 6 %, Luzernegrünmehl,

- und jeweils ergänzend auf 100 Gew.-% Basismischung, Mineralstoffe, Spurenelemente bzw. -geber, Aminosäuren, Vitamine und/oder Trägerstoffe enthält,

- und in Kombination mit der genannten Basismischung mit dem Ein- bis Dreifachen von deren Menge zusätzlich dicksaurer Magermilch und/oder Buttermilch gefüttert werden, wobei pro Tier bei 23 (± 20%) kg bis 105 (± 10%) kg Lebendgewicht innerhalb von 15 (± 10%) Wochen in - von 1,1 (± 10%) kg als Tagesration ausgehend - um 0,1 bis 0,2 (jeweils ±10%)kg pro Woche steigenden Tagesmengen eine wie oben angegebene Futtermittel-Basismischung zusammen mit - in bis zum Ende der 12 (±10%)ten Aufzuchtswoche etwa gleichbleibenden Mengen - Tagesrationen von 3 (± 10%) l und danach bis zum Mastende auf 1 (± 10%)l sinkenden Mengen dicksaure Mager- und/oder Buttermilch verfüttert wird, wobei erst ab Beginn der 13 (± 10%)ten Woche, in jeweils auf insgesamt 3 (± 10%) l Gesamtflüssigkeit ergänzenden Mengen Wasser verabreicht wird, wobei die Fütterung der Tiere unter Ausschluß von Eiweißen (bzw. Proteinen) und Fetten aus anderen als den oben genannten Futtermittel-Komponenten pflanzlichen und/oder tierischen Ursprungs vorgenommen wird.

2. Verfahren nach Anspruch 1, dadurch gekennzeichnet, daß im Verlaufe der Aufzucht und/oder Mast gemäß dem dort angegebenen Aufzucht-Schema Tiere mit nicht entsprechender Gewichtszunahme und/oder gesundheitliche Schäden aufweisende und/oder medikamentöser Behandlung unterzogene Tiere ausgeschieden werden und nach der Aufzucht und/oder Mast nur solche Tiere nach Schlachtung einer Weiterverarbeitung zugeführt werden, deren Schlachtgewicht (kalt) 75 bis 100 kg, insbesondere 75 bis 85 kg, beträgt, in deren Muskelgewebe 24 Stunden nach Schlachtung der pH-Wert kleiner als 6, insbesondere kleiner als 5,8, ist und bei denen die von einer Fettprobe aus dem Nacken ermittelte Jod-Zahl nach Hanus höchstens 68 und/oder die Fettzahl (nach Prabucki) weniger als 58 beträgt.

3. Verfahren nach Anspruch 1 oder 2, dadurch gekennzeichnet, daß die Schweine mit einer Futtermittelmischung gefüttert werden, deren Basismischung zusätzlich zu den im Anspruch 1 genannten Hauptkomponenten, jeweils bezogen auf das Gewicht, als Mineralstoffe und Spurenelemente zumindest eine, vorzugsweise mehrere, insbesondere alle, der Komponenten

2 bis 3 % kohlensaurer Futterkalk,

0,5 bis 1,6 % Calciumphosphat,

0,2 bis 0,6 % Natriumchlorid,

0,002 bis 0,01 % Eisen,

0,005 bis 0,015 % Magnesium,

0,003 bis 0,01 % Mangan,

0,003 bis 0,007 % Zink,

0,001 bis 0,002 % Kupfer,

0,00001 bis 0,00002 % Cobalt, jeweils vorzugsweise jedes dieser Elemente als Sulfat oder Oxid,

0,0002 bis 0,0005 % Calciumiodat, und

0,00002 bis 0,0001 % Natriumselenit,

- und/oder als Aminosäuren und/oder Vitamine zumindest eine, vorzugsweise mehrere, insbesondere alle, der Komponenten

```
0,1     bis 0,3      % Methionin,
0,01    bis 0,08     % Cholinchlorid,
0,005   bis 0,02     % Vitamin C,
0,001   bis 0,01     % Vitamin E,
0,001   bis 0,003    % Vitamin B_{12} (1g/kg)
0,001   bis 0,005    % Vitamin A500,
0,0005  bis 0,001    % Vitamin B_2,
0,0001  bis 0,001    % Vitamin B_6,
0,0001  bis 0,0006   % Vitamin K_3,
0,0001  bis 0,0005   % Vitamin D_3,
0,00005 bis 0,0002   % Vitamin B_1,
0,00001 bis 0,0001   % Folsäure,
0,0004  bis 0,0015   % Calciumpanthothenat,
0,001   bis 0,005    % Niacin und
0,0001  bis 0,001    % Biotin
```

enthält.

4. Variante des Verfahrens nach einem der Ansprüche 1 bis 3 mit Zusatz von gekochten Kartoffeln zum Futter, dadurch gekennzeichnet, daß zum Erhalt von Fremdstoffrückstands-Freiheit, Wohlgeschmack und hoher Bekömmlichkeit der obengenannten Produkte die Tiere mit einer Futtermittelmischung mit einer Basismischung, welche, jeweils bezogen auf das Gewicht,

      30 bis 70 %, vorzugsweise 45 bis 55 %, Futtererbsenschrot,
      10 bis 30 %, vorzugsweise 15 bis 25 %, Roggenschrot,
      5 bis 25 %, vorzugsweise 10 bis 20 %, Gerstenschrot,
      1 bis 12 %, vorzugsweise 3 bis 7 %, Weizen und/oder Roggenkleie und bevorzugt zusätzlich
      0,5 bis 10 %, vorzugsweise 3 bis 7 %, Luzernegrünmehl

- und weiters Mineralstoffe, Spurenelemente bzw. -geber, Aminosäuren und/oder Vitamine enthält,
- sowie vorzugsweise Kombination mit dieser Basismischung zusätzlich zumindest das Einfache, vorzugsweise das 2- bis 8-Fache von deren Menge aufgeschlossene, vorzugsweise gedämpfte, Kartoffel und
- das 1- bis 8-Fache, vorzugsweise das 2- bis 2,5-Fache der Menge der Basismischung dicksaure Magermilch und/oder insbesondere frische Buttermilch aufweist, gefüttert werden, wobei den Tieren von einem Einstellgewicht von 20 bis 25 kg an bis zum Mastende bei 100 kg bis 110 kg Tier jeweils 1 ($\pm$ 20%) kg der oben angegebenen Futtermittel-Basismischung verabreicht werden, wobei bis zu einem Lebendgewicht von 40 ($\pm$ 10%) kg jeweils zusätzlich 2 ($\pm$ 10%) l, und ab 40 ($\pm$ 10%) kg Lebendgewicht bis Mastende 2,5 ($\pm$ 10%) l pro Tag dicksaure Mager- und/oder Buttermilch, sowie vom Mastbeginn an in von 2 ($\pm$ 10%) kg ausgehend steigenden Mengen gedämpfte Kartoffel beigegeben werden, und wobei die Steigerung der Kartoffelgaben in dem Maß erfolgt, welche Menge davon die Tiere innerhalb von insgesamt 2 mal 30 ($\pm$10%) Minuten pro Tag aufnehmen, wobei die Fütterung der Tiere unter Ausschluß von Eiweißen (bzw. Proteinen) und Fetten aus anderen als den oben genannten Futtermittel-Komponenten pflanzlichen und/oder tierischen Ursprungs vorgenommen wird.

5. Verfahren nach Anspruch 4, dadurch gekennzeichnet, daß ein Ausscheiden der Tiere im Verlaufe der Zucht und eine Selektion zur Weiterverarbeitung gemäß Anspruch 2 vorgenommen wird.

6. Verfahrensvariante gemäß Anspruch 4 oder 5, dadurch gekennzeich- net, daß die Schweine mit einer Futtermittelmischung gefüttert werden, deren Basismischung mindestens einen (eine, eines) der im Anspruch 3 genannten Mineralstoffe, Spurenelemente, Aminosäuren und Vitamine sowie zusätzlich 0,2 bis 0,8 Gew.-%, vorzugsweise 0,4 bis 0,6 Gew.-%, Lysin, enthält.

7. Verfahrensvariante gemäß einem der Ansprüche 4 bis 6, dadurch gekennzeichnet, daß den Schweinen die dort pro Tag und Tier angegebenen Futtermittelmengen jeweils in zwei Rationen verabreicht werden.

8. Verfahrensvariante gemäß einem der Ansprüche 4 bis 7, dadurch gekennzeichnet, daß den Tieren zusätzlich zur Futtermittel-Basismischung und dicksauren Mager- und/oder Buttermilch jeweils bei 40,60,70,80 und 100 (jeweils ± 10%) kg Lebendgewicht jeweils in ansteigenden Mengen 3,4,5,6 und 7 (jeweils ± 10%) kg pro Tag gedämpfte Kartoffel verabreicht werden.

9. Verfahren zur Herstellung von Muskel-, Fleisch-, Speck-, Fett-, Organ- und Gewebsteilen von Schweinen, für eine Weiterverarbeitung zu Human-Nahrungsmittel-Produkten, insbesondere Speck-, Fleisch-, Schinken- und Wurstprodukte, dadurch gekennzeichnet, daß zum Erhalt von Fremdstoffrückstands-Freiheit, Wohlgeschmack und hoher Bekömmlichkeit der genannten Produkte die Tiere unter Einsatz der in den Ansprüchen 1,3,4 und 8 angegebenen Futtermittelmischungen bzw. deren Varianten und unter Ausschluß von Gaben von Hormonen, wachstumsfördernden Mitteln und Arznei-Mitteln einer Aufzucht und/oder Mast gemäß einem der in den Ansprüchen 1,3,4 sowie 6 bis 8 angegebenen Schemata unterzogen werden.

10. Verfahren nach Anspruch 9, dadurch gekennzeichnet, daß zum Erhalt von Fremdstoff-Rückstandsfreiheit, Wohlgeschmack und hoher Bekömm- lichkeit der Produkte im Verlaufe der Aufzucht und/oder Mast Tiere mit dem oben festgelegten Aufzucht-Schema nicht entsprechender Gewichtszunahme und/oder gesundheitliche Schäden aufweisende und/oder medikamentöser Behandlung unterzogene Tiere strikte ausgeschieden werden und nach erfolgter Aufzucht und Schlachtung nur solche Tiere der Weiterverarbeitung zugeführt werden, deren Schlachtgewicht (kalt) 75 bis 100, vorzugsweise 75 bis 85 kg, beträgt, in deren Muskelgewebe 24 Stunden nach Schlachtung der pH-Wert kleiner als 6, insbesondere kleiner als 5,8, ist und bei denen die von einer Fettprobe aus dem Nacken ermittelte Jod-Zahl nach Hanus höchstens 68 und/oder die Fettzahl (nach Prabucki) weniger als 58 beträgt.

11. Futtermittelmischung für die Aufzucht und/oder Mast von Schweinen für Human-Nahrungsmittel-Produkte nach einem der Ansprüche 1-3, 9 oder 10 auf Basis von Getreide- und Futterpflanzen mit Erbsen und Luzerne, Spurenelementen und/oder Aminosäuren und/oder Vitaminen, mit gesäuerter Milch, dadurch gekennzeichnet, daß sie zum Erhalt von fremdstoff-rück- standsfreien, nach einer Weiterverarbeitung zu Fleischprodukten, Wohlgeschmack und hohe Bekömmlichkeit aufweisenden Fleisch-, Muskel-, Speck-, Fett-, Organ- und Gewebsteilen eine von Hormonen, chemischen, mikro- biellen und antibiotischen, wachstums- bzw. leistungsfördernden Mitteln und Arzneimitteln freigehaltene, vorzugsweise in pelletierter Form vorliegende Basismischung, welche als Hauptkomponenten, jeweils bezogen auf 100 Ges.-%,
- 20 bis 50 %, vorzugsweise 30 bis 40 %, Gerstenschrot,
- 20 bis 50 %, vorzugsweise 25 bis 40 %, Roggenschrot,
- 10 bis 25 %, vorzugsweise 12 bis 20 %, Erbsenschrot,
- 5 bis 15 %, vorzugsweise 8 bis 12 %, Weizen- und/oder Poggenkleie, bevorzugt zusätzlich
- 0,5 bis 8 %, vorzugsweise 2 bis 6 %, Luzernegrünmehl
- und jeweils ergänzend auf 100 Gew.-% Basismischung, Mineralstoffe, Spurenelemente bzw. -geber, Aminosäuren, Vitamine und/oder Trägerstoffe enthält,
- und in Kombination mit der genannten Basismischung das Ein- bis Dreifache von deren Menge zusätzlich dicksaure Magermilch und/oder Buttermilch aufweist.

12. Futtermittelmischung nach Anspruch 11, dadurch gekennzeichnet, daß die Basismischung zusätzlich zu den in diesem Anspruch genannten Hauptkomponenten, jeweils bezogen auf Gewicht, als Mineralstoff(e) und Spurenelement(e) zumindest eine, vorzugsweise mehrere, insbesondere alle, der im Anspruch 4 genannten Komponenten und/oder als Aminosäure(n) und/oder Vitamin(e) zumindest eine, vorzugsweise mehrere, insbesondere alle, der dort genannten Aminossäuren und/oder Vitamine enthält.

13. Variante der Futtermittelmischung für die Aufzucht und/oder Mast von Schweinen für Human-Nahrungsmittel-Produkte nach einem der Ansprüche 4-10, dadurch gekennzeichnet, daß sie eine, vorzugsweise in pelletierter Form vorliegende, Basismischung, welche jeweils bezogen auf Gewicht
- 30 bis 70 %, vorzugsweise 45 bis 55 %, Futtererbsenschrot,
- 10 bis 30 %, vorzugsweise 15 bis 25 %, Roggenschrot,
- 5 bis 25 %, vorzugsweise 10 bis 20 %, Gerstenschrot,
- 1 bis 12 %, vorzugsweise 3 bis 7 %, Weizen- und/oder Roggenkleie,
bevorzugt zusätzlich

0,5 bis 10 %, vorzugsweise 3 bis 7 %, Luzernegrünmehl,
- und weiters Mineralstoffe, Spurenelemente bzw. -geber, Aminosäuren und/oder Vitamine enthält,
- sowie vorzugsweise in Kombination mit dieser Basismischung zusätzlich zumindest das Einfache, vorzugsweise das 2- bis 8-Fache von deren Menge, aufgeschlossene, vorzugsweise gedämpfte, Kartoffel und
- das 1- bis 8-Fache, vorzugsweise das 2- bis 2,5-Fache, der Menge der Basismischung, dicksaure Magermilch und/oder insbesondere frische Buttermilch aufweist.

14. Futtermittelmischungs-Variante nach Anspruch 13, dadurch gekennzeichnet, daß deren Basismischung zusätzlich die im Anspruch 3 genannten Mineralstoffe, Spurenelemente, Aminosäuren und/oder Vitamine sowie weiters zusätzlich 0,2 bis 0,8 Gew.-%, vorzugsweise 0,4 bis 0,6 Gew.-%, Lysin, enthält.

## Claims

1. Process for growing and/or fattening of pigs for producing muscle parts, flesh parts, bacon parts, fat parts, organ parts and tissue parts of these animals, for being further processed to food products for human beings, in particular bacon products, flesh products, ham products and sausage products, noting that the animals are supplied with a basic forage on basis of cereal plants and forage crops with peas and lucerne as well as with curdled milk and with mineral substances for forage and/or amino-acids and/or vitamines, characterized in that the animals are, for the purpose of obtaining exemption from residual foreign matter, pleasant taste and high digestibility of the above-mentioned products, fed with a fodder mixture comprising a basic mixture being free of hormones, chemical agents, microbial agents, antibiotic agents, growth-promoting agents, power-promoting agents as well as of drugs and containing as main components, each on a weight-basis,

   20 to 50 %, preferably 30 to 40 %, bruised barley grain,
   20 to 50 %, preferably 25 to 40 % bruised rye grain,
   10 to 25 %, preferably 12 to 20 %, bruised peas,
   5 to 15 %, preferably 8 to 12 %, wheat bran and/or rye bran,
   preferably additionally
   0.5 to 8 %, preferably 2 to 6 %, green meal of lucerne,
   - and, in each case, supplementary to 100 percent by weight basic mixture, mineral substances, trace elements and donators of trace elements, respectively, vitamines and/or carrying substances,
   - and in combination with said mentioned basic mixture with the single amount to the triple amount of the amount of said basic mixture additionally with thick-curdled skim milk and/or buttermilk, noting that there are fed per animal having a live weight of 23 ($\pm$ 20%) kg to 105 ($\pm$ 10%) kg within 15 ($\pm$ 10%) weeks in daily amounts - starting from a daily amount of 1,1 ($\pm$ 10%) kg - increasing per week for 0.1 to 0.2 (in each case $\pm$10%) kg a forage basic mixture of the above-mentioned type together with thick-curdled skim milk and/or buttermilk in daily, approximately constant, amounts of 3($\pm$10%)l till the end of the 12 ($\pm$10%)$^{th}$ week of growth and thereafter in amounts being reduced till the end of the fattening period down to 1 ($\pm$10%)l, noting that only after the beginning of the 13 ($\pm$10%)$^{th}$ week there is given water in amounts supplementing to a total amount of liquid of 3 ($\pm$10%)l as a whole, noting that feeding of the animals is performed with the exclusion of albumens (proteins respectively) and fats of other origin than the above-mentioned forage-components of plant origin and/or animal origin.

2. Process according to claim 1, characterized in that, during the period of growing and/or fattening according to the scheme of growing indicated there, animals are eliminated which show no adequate weight increase and/or show injuries to health and/or were subjected to a medicinal treatment, and only such animals are, after growing and/or fattening, subjected to further processing after slaughter which have a slaughter weight (cold) of 75 to 100 kg, in particular 75 to 85 kg, in which the pH-value is smaller than 6, in particular smaller than 5.8, within the muscle tissue 24 hours after killing and for which in a fat sample taken from the neck the iodine number determined according to Hanus is at most 68 and/or the fat number (according to Prabucki) is less than 58.

3. Process according to claim 1 or 2, characterized in that the pigs are fed with a fodder mixture, the basic mixture of which contains in addition to the main components mentioned in claim 1 as mineral substances and trace elements, each based on the weight, at least one, preferably a plurality, in particular all, of the

components

```
   2         to 3          % carbonic forage limestone,

   0.5       to 1.6        % calcium phosphate,
   0.2       to 0.6        % sodium chloride,
   0.002     to 0.01       % iron,
   0.005     to 0.015      % magnesium,
   0.003     to 0.01       % manganese,
   0.003     to 0.007      % zinc,
   0.001     to 0.002      % copper,
   0.00001 to 0.00002 % cobalt, preferably each of these
                                 elements in form of the
                                 sulfate or oxide,
   0.0002  to 0.0005  % calciumiodate and
   0.00002 to 0.0001  % sodium selenite,
```

- and/or as amino acids and or vitamines at least one, preferably a plurality, in particular all of the components

```
   0.1       to 0.3     % methionine,
   0.01      to 0.08    % cholin chloride,
   0.005     to 0.02    % vitamin C,
   0.001     to 0.01    % vitamin E,
   0.001     to 0.003   % vitamin B$_{12}$ (1g/kg),
   0.001     to 0.005   % vitamin A500,
   0.0005    to 0.001   % vitamin B$_2$,
   0.0001    to 0.001   % vitamin B$_6$,
   0.0001    to 0.0006  % vitamin K$_3$,
   0.0001    to 0.0005  % vitamin D$_3$,
   0.00005   to 0.0002  % vitamin B$_1$,
   0.00001   to 0.0001  % folic acid,
   0.0004    to 0.0015  % calciumpanthothenate,
   0.001     to 0.005   % niacin and
   0.0001    to 0.001   % biotin.
```

4. Variant of the process according to any of the claims 1 to 3 with an addition of cooked potatoes to the forage, characterized in that the animals are, for the purpose of obtaining exemption from residual foreign matter, pleasant taste and digestibility of the above-mentioned products, fed with a fodder mixture comprising a basic mixture containing as main components, each on a weight-basis,

30 to 70 %, preferably 25 to 55 %, bruised forage peas,
10 to 30 %, preferably 15 to 25 %, bruised rye grain,
5 to 25 %, preferably 10 to 20 %, bruised barley grain,
1 to 12 %, preferably 3 to 7 %, wheat bran and/or rye bran and

EP 0 502 931 B1

preferably additionally

0.5 to 10 %, preferably 3 to 7 %, green meal of lucerne
- and further mineral substances, trace elements and donators of trace elements, respectively, amino acids and/or vitamins,
- as well as preferably in combination with this basic mixture additionally at least the simple amount, preferably the double to the 8-fold amount, of the basic mixture, preferably stewed, potatoes and
- the single amount to the 8-fold amount, preferably the 2--fold to 2.5-fold amount, of the basic mixture thick-curd- led skin milk and/or particularly fresh buttermilk,

noting that the animals are, starting from a starting weight of 20 to 25 kg till the end of the fattening period corresponding to 100 kg to 110 kg per animal, given each 1($\pm$20%)kg of the above mentioned forage basic mixture, noting that up to a live weight of 40($\pm$10%)kg in each case is additionally supplied 2($\pm$10%)l and beginning with a live weight of 40($\pm$10%)kg till the end of the fattening period there is supplied thick-curdled skim milk and/or buttermilk in an amount of 2.5($\pm$10%)l per day as well as there are supplied, starting with the beginning of the fattening period, stewed potatoes in amounts increasing from 2($\pm$10%)kg, and noting that the increase of the amount of supplied potatoes is effected in dependence on the amount of potatoes which is consumed by the animals within a period of , in total, 2-times 30($\pm$10%) minutes per day, noting that the feeding of the animals is performed with the exclusion of albumens (proteins respectively) and fats of other origin than the above-mentioned forage-components of plant origin and/or animal origin.

5. Process according to claim 4, characterized in that an elimination of the animals during the growth period and a selection for further processing is performed according to claim 2.

6. Process variant according to claim 4 or 5, characterized in that the pigs are fed with a fodder mixture, the basic mixture of which comprises at least one of the mineral substances, trace elements, amino acids and vitamins mentioned in claim 3 as well as additionally 0.2 to 0.8 percent by weight, preferably 0.4 to 0.6 percent by weight lysine.

7. Process variant according to any of the claims 4 to 6, characterized in that the pigs are given the forage amounts mentioned there per day and animal in respective two rations.

8. Process variant according to any of the claims 4 to 7, characterized in that the animals are given in addition to the forage basic mixture and in addition to the thick-curdled skim milk and/or buttermilk at a respective live weight of 40, 60, 70, 80 and 100(in each case $\pm$10%)kg stewed potatoes in respective increasing amounts of 3, 4, 5, 6 and 7(in each case $\pm$10%)kg per day.

9. Process for producing muscle parts, flesh parts, bacon parts, fat parts, organ parts and tissue parts of pigs for being further processed to food products for human beings, in particular bacon products, flesh products, ham products and sausage products, characterized in that the animals are, for the purpose of obtaining exemption from residual foreign matter, pleasant taste and high digestibility of tne mentioned products, subjected, by using the forage mixtures and, respectively, their variants defined in the claims 1, 3, 4 and 8 with the exclusion of added hormones, growth promoting agents and drugs, to growing and or fattening according to the schemes indicated in any of the claims 1, 3, 4 as well as 6 to 8.

10. Process according to claim 9, characterized in that, for the purpose of obtaining exemption from residual foreign matter, pleasant taste and high digestibility of the mentioned products, animals are strictly eliminated which show no weight increase adequate to the growing scheme defined above and/or show injuries to health and/or were subjected to medicinal treatment during growing and/or fattening and only such animals are after growing and slaughtening subjected to further processing which have a slaughter weight (cold) of 75 to 100 kg, in particular 75 to 85 kg, in which the pH-value is smaller than 6, in particular smaller than 5.8, within the muscle tissue 24 hours after killing and for which in a fat sample taken from the neck the iodine number determined according to Hanus is at most 68 and/or the fat number (according to Prabucki) is less than 58.

11. Fodder mixture for growing and/or fattening pigs for food products for human beings according to any of the claims 1 to 3, 9 or 10 and being based on cereal plants and forage crops with peas and lucerne, trace elements and/or amino acids and/or vitamins, with curdled milk, characterized in that the forage mixture comprises, for the purpose of obtaining exemption from residual foreign matter, pleasant taste and high digestibility of flesh products, obtained by further processing flesh parts, muscle parts, bacon parts, organ

15

parts and tissue parts, a basic mixture free of hormones, chemical agents, microbial agents, antibiotic agents, growth-promoting agents and, respectively, power-promoting agents and drugs and preferably being present in pelletized form and containing as main components, each based on 100 percent by weight,

    20 to 50 %, preferably 30 to 40 %, bruised barley grain,

    20 to 50 %, preferably 25 to 40 %, bruised rye grain,

    10 to 25 %, preferably 12 to 20 %, bruised peas,

    5 to 15 %, preferably 8 to 12 %, wheat brain and/or rye brain,

preferably additionally

    0.5 to 8 %, preferably 2 to 6 %, green meal of lucerne

- and, supplementing to 100 percent by weight of basic mixture, mineral substances, trace elements and, respectively, donators of trace elements, amino acids, vitamins and/or carrying substances,
- said fodder mixture comprising in combination with the mentioned basic mixture the single amount to the triple amount of the basic mixture in addition thick-curdled skim milk and/or buttermilk.

12. Fodder mixture according to claim 11, characterized in that the basic mixture contains, in addition to the main components mentioned in this claim, each on a weight basis, as mineral substance(s) and trace element(s) at least one, preferably more, in particular all of the components mentioned in claim 4 and/or as amino acid(s) and/or vitamin(s) at least one, preferably more, in particular all of the amino acids and/or vitamins mentioned there.

13. Variant of the fodder mixture for growing and/or fattening of pigs for food products for human beings according to any of the claims 4 to 10, characterized in that it comprises a basic mixture, preferably being present in pelletized form, containing, each on a weight basis,

    30 to 70 %, preferably 45 to 55 %, bruised peas,

    10 to 30 %, preferably 15 to 25 %, bruised rye grain,

    5 to 25 %, preferably 10 to 20 %, bruised barley grain,

    1 to 12 %, preferably 3 to 7 %, wheat bran and/or rye bran,

preferably additionally

    0.5 to 10 %, preferably 3 to 7 %, green meal of lucerne,

- and further mineral substances, trace elements and donators of trace elements, respectively, amino acids and/or vitamins,
- as well as, preferably in combination with this basic mixture, additionally at least the simple amount, preferably the 2-fold to 8-fold amount, of said basic mixture disintegrated, preferably stewed, potatoes and
- the simple amount to the 8-fold amount, preferably the 2-fold to 2.5-fold amount, of the amount of the basic mixture, thick-curdled skim-milk and/or, in particular fresh, buttermilk.

14. Variant of the fodder mixture according to claim 13, characterized in that its basic mixture contains additionally the mineral substances, trace elements, amino acids and/or vitamins mentioned in claim 3 as well as further additionally 0.2 to 0,8 percent by weight, preferably 0.4 to 0.6 percent by weight, lysine.

## Revendications

1. Procédé d'élevage et/ou d'engraissement de porcs, pour produire du muscle, de la viande, du lard, de la graisse, des parties d'organes et de tissus de ces animaux pour un traitement complémentaire de transformation en des produits alimentaires pour les êtres humains, en particulier des produits à base de lard, de viande ou chair, du jambon et de la saucisse, procédé selon lequel les animaux sont pourvus d'une alimentation à base de céréales et de plantes fourragères avec des pois et de la luzerne ainsi que du lait acidifié et d'autres matières minérales alimentaires et/ou des amino-acides et/ou des vitamines, procédé caractérisé en ce que pour obtenir une absence de résidu de substances étrangères, un bon goût et une digestibilité élevée des produits précités, les animaux sont alimentés avec un mélange d'aliments pour le bétail comportant un mélange à base d'hormones, de produits chimiques, de produits microbiens, d'antibiotiques, d'agents de croissance et de produits augmentant le rendement, ce mélange étant dépourvu de médicament, et comportant, comme composants principaux, la proportion étant chaque fois rapportée au poids :

20 à 50 %, avantageusement 30 à 40 %, de mouture d'orge,

20 à 50 %, avantageusement 25 à 40 %, de mouture de seigle,

10 à 25 %, avantageusement 12 à 20 %, de mouture de pois,

5 à 15 %, avantageusement 8 à 12 %, de son de blé et/ou de seigle, et de préférence, en outre,

0,5 à 8 %, avantageusement 2 à 6 %, de farine verte de luzerne,

et - chaque fois pour compléter à 100 % du mélange de base, des matières minérales, des oligo-éléments ou des donneurs d'oligo-éléments, des acides aminés, des vitamines et/ou des matières de support,

- et, en combinaison avec le mélange de base cité, on fournit aux animaux une à trois fois la quantité de ce mélange de base, en supplément, de lait maigre (écrêmé) épaissi par acidification et/ou de petit lait, et l'on administre aux animaux pour 23 (± 20 %) kg à 105 (± 10 %) de poids vif, en l'espace de 15 (± 10 %) semaines - en partant 1,1 (± 10 %) kg comme ration quotidienne - des quantités quotidiennes augmentant de 0,1 à 0,2 (à chaque fois ± 10 %) kg par semaine d'un mélange de base des aliments indiqués ci-dessus avec - en des quantités demeurant approximativement les mêmes jusqu'à la fin des 12 semaines d'engraissement (± 10 %) - des rations quotidiennes de 3 (± 10 %) litres, puis des quantités diminuant jusqu'à la fin de l'engraissement pour parvenir à 1 (± 10 %) litre de lait maigre ou écrémé, épaissi par acidification et/ou de petit lait, et ce n'est qu'à partir du début de la treizième semaine (± 10 %) que l'on administre de l'eau chaque fois en des quantités complémentaires allant au total jusqu'à 3 (± 10 %) litres de liquide total, l'alimentation des animaux étant réalisée avec exclusion des albumines (ou des protéines) et des matières grasses d'une autre origine végétale et/ou animale que celles des composants des aliments précités.

2. Procédé selon la revendication 1, caractérisé en ce qu'au cours de l'élevage et/ou de l'engraissement selon le schéma d'élevage qui y est indiqué, on exclut les animaux ne présentant pas une prise de poids correspondante et/ou présentant des troubles de la santé et/ou soumis à un traitement médicamenteux et, après l'élevage et/ou l'engraissement, on n'achemine, après abattage, vers la suite du traitement de transformation que les animaux dont le poids mort (à froid) est de 75 à 100 kg, en particulier 75 à 85 kg, dont le pH du tissu musculaire est, 24 heures après abattage, inférieur à 6 et notamment inférieur à 5,8 et dans le cas desquels l'indice d'iode déterminé selon Hanus sur un échantillon de graisse prélevée sur l'échine vaut au maximum 68 et/ou l'indice de graisse (selon Prabucki) est inférieur à 58.

3. Procédé selon la revendication 1 ou 2, caractérisé en ce que les porcs reçoivent comme alimentation un mélange alimentaire dont le mélange de base comporte, en plus des composants principaux cités à la revendication 1, et chaque fois par rapport au poids, comme substances minérales et oligo-éléments au moins 1, avantageusement plusieurs, en particulier la totalité des composants :

```
2        à 3 % de chaux alimentaire carbonatée,

0,5      à 1,6 % de phosphate de calcium,

0,2      à 0,6 % de chlorure de sodium,

0,002    à 0,01 % de fer,

0,005    à 0,015 % de magésium,

0,003    à 0,01  % de manganèse,

0,003    à 0,007 % de zinc,

0,001    à 0,002 % de cuivre,

0,00001  à 0,00002 % de cobalt, chacun de ces éléments étant
         avantageusement sous forme de sulfate ou d'oxyde,

0,0002   à 0,0005 % d'iodate de calcium, et

0,00002  à 0,0001 % de sélénite de sodium,
```

et/ou comme amino-acides et/ou vitamines, au moins un des composants, avantageusement plusieurs et en particulier la totalité des composants suivants :

```
0,1      à 0,3      % de méthionine,

0,01     à 0,08     % de chlorure de choline,

0,005    à 0,02     % de vitamine C,

0,001    à 0,01     % de viamine E,

0,001    à 0,003    % de vitamine B₁₂ (1g/kg),

0,001    à 0,005    % de vitamine A500,

0,0005   à 0,001    % de vitamine B₂,

0,0001   à 0,001    % de vitamine B₆,

0,0001   à 0,0006   % de vitamine K₃,

0,0001   à 0,0005   % de vitamine D₃,

0,00005  à 0,0002   % de vitamine B₁

0,00001  à 0,0001   % d'acide folique,

0,0004   à 0,0015   % de pantothénate de calcium,

0,001    à 0,005    % de niacine et,

0,0001   à 0,001    % de biotine .
```

4. Variante du procédé selon l'une des revendications 1 à 3, avec addition de pommes de terre bouillies à l'alimentation, variante caractérisée en ce que pour obtenir l'absence de résidus de substances étrangères, une bonne digestibilité et un bon goût des produits précités, on fournit aux animaux un mélange d'aliments comportant un mélange de base qui contient, rapporté à chaque fois au poids,

30 à 70 %, avantageusement 45 à 55 %, de mouture de pois alimentaire,

10 à 30 %, avantageusement 15 à 25 %, de mouture de seigle,

5 à 25 %, avantageusement 10 à 20 %, de mouture d'orge,

1 à 12 %, avantageusement 3 à 7 %, de son de blé et/ou de seigle et de préférence aussi

0,5 à 10%, avantageusement 3 à 7 %, de farine verte de luzerne,

et d'autres substances minérales, des oligo-éléments ou des produits fournissant des oligo-éléments, des amino-acides et/ou des vitamines,

et, avantageusement en combinaison avec ce mélange de base, en outre au moins en une quantité représentant une fois, avantageusement deux à fois huit fois, des pommes de terre ouvertes, avantageusement cuites à la vapeur, et

- 1 à 8 fois, avantageusement 2 à 2,5 fois la quantité du mélange de base en du lait maigre ou écrêmé, épaissipar acidification et/ou en particulier du petit lait frais, les animaux étant alimentés depuis un poids de départ de 20 à 25kg jusqu'à un poids de fin d'engraissement de 100 à 110 kg par animal, auquel on fournit à chaque fois 1 (± 20 %) kg du mélange de base des aliments indiqués ci-dessus, et jusqu'à un poids vif de 40 (± 10 %) kg) on fournit en outre 2(± 10 %) litres, et, à partir de 40 (± 10 %) kg de poids vif jusqu'à la fin de l'engraissement on fournit 2,5 (± 10 %) l par jour de lait maigre ou écrêmé épaissi par acidification et/ou de petit lait, et depuis le début de l'engraissement on y ajoute en des quantités croissantes, partant de 2 (± 10%) kg des pommes de terre cuites à la vapeur, l'augmentation des fournitures de pommes de terre dépendant de la quantité de pommes de terre que les animaux absorbent en l'espace de deux fois 30 minutes au total (± 10 %) par jour, l'alimentation des animaux étant réalisée en excluant des albumines (ou des protéines) et des matières grasses d'une origine végétale et/ou animale autre que celle des composants alimentaires précités.

5. Procédé selon la revendication 4, caractérisé en ce qu'au cours de l'élevage, on exclut des animaux et l'on effectue une sélection en vue de la suite du traitement de transformation, en opérant selon la revendication 2.

6. Variante opératoire selon la revendication 4 ou 5, caractérisée en ce que les porcs reçoivent comme alimentation un mélange dont le mélange de base contient au moins un ou une des substances minérales, des oligo-éléments, des acides aminés et des vitamines que l'on cite à la revendication 3 et comportant en outre 0,2 à 0,8 %, avantageusement 0,4 à 0,6% en poids, de lysine.

7. Variante opératoire selon une des revendications 4 à 6, caractérisée en ce qu'on administre aux porcs, chaque fois en deux rations, les quantités des aliments qui y sont indiquées par jour et par animal.

8. Variante opératoire selon l'une des revendications 4 à 7, caractérisée en ce qu'on fournit aux animaux, en plus du mélange des aliments de base et du lait maigre épaissi par acidification et/ou du petit lait, chaque fois pour 40, 60, 70, 80 et 100 (chaque fois ± 10 %) kg de poids vif et chaque fois en des quantités croissantes 3, 4, 5, 6, et 7 (à chaque fois ± 10 %) kg par jour de pommes de terre cuites à la vapeur,

9. Procédé pour produire du muscle, de la viande, du lard, de la graisse, des parties d'organes et de tissu de porc, en vue d'un traitement de transformation en des produits alimentaires pour les êtres humains, en particulier des produits à base de lard, de chair ou de viande, de jambon ou de saucisson, procédé caractérisé en ce que pour obtenir l'absence de résidus de substances étrangères, un bon goût et une grande digestibilité des produits cités, on soumet les animaux, en utilisant les mélanges de produits alimentaires indiqués aux revendications 1,3, 4 et 8 ou leurs variantes et à l'exclusion de fourniture d'hormones, d'agents d'accélération de la croissance et de médicaments, à un élevage et/ou à un engraissement selon l'un des schémas indiqués dans les revendications 1, 3, 4 ainsi que 6 à 8.

10. Procédé selon la revendication 9, caractérisé en ce que, pour obtenir l'absence de résidus de substances étrangères, un bon goût et une grande digestibilité des produits, on exclut strictement les animaux dont la prise de poids ne correspond pas au schéma d'élevage indiqué ci-dessus et/ou qui présentent des troubles de santé et/ou sont soumis à un traitement médicamenteux et, après élevage et abattage, on n'envoie vers le traitement de transformation que les animaux dont le poids mort (à froid) est de 75 à 100, avantageusement 75 à 85 kg, dont le tissu musculaire présente 24 heures après l'abattage un pH inférieur à 6, notamment inférieur à 5,8 et dans le cas desquels l'indice d'iode, déterminé selon Hanus sur un échantillon de graisse prélevée sur l'échine vaut au amximum 68 et/ou l'indice de graisse (selon Prabucki) est inférieur à 58.

11. Mélange alimentaire pour l'élevage et/ou l'engraissement de porcs pour la fourniture de produits pour l'alimentation humaine, selon l'une des revendications 1 à 3, 9 ou 10, à base de céréales et de plantes fourragères avec des pois et de la luzerne, des oligo-éléments et/ou des amino-acides et/ou des vitamines, avec du lait acidifié, mélange caractérisé en ce que, pour obtenir l'absence de résidus de substances étrangères après un traitement de transformation donnant des produits à base de chair ou de viande, ayant un bon goût et une forte digestibilité de chair ou de viande, de muscle, de gras, de lard, de matière grasse, de tissus parties d'organes et de tissus, ce mélange, maintenu dépourvu d'hormones, d'agents chimiques, microbiens et antibiotiques, d'agents favorisant la croissance ou le rendement et en l'absence de médicament, le mélange, avantageusement sous forme de comprimés, présente le mélange de base suivant qui contient comme composants principaux, chacun étant rapporté à 100 % en poids :
20 à 50 %, avantageusement 30 à 40 %, de mouture d'orge,
20 à 50 %, avantageusement 25 à 40 %, de mouture de seigle,
10 à 25 %, avantageusement 12 à 20 %, de mouture de pois,
5 à 15 %, avantageusement 8 à 12 %, de son de blé et/ou de seigle, et de préférence, en outre, 0,5 à 8%, avantageusement 2 à 6 % de farine verte de luzerne,
et, chaque fois pour compléter à 100 parties en poids du mélange de base, des substances minérales, des oligo-éléments ou des substances fournissant des oligo-éléments, des aminoacides, des vitamines et/ou des matières de support, et qui présente, en combinaison avec le mélange de base cité, une à trois fois la quantité de ce mélange, constituée par du lait maigre ou écrêmé, épaissi par son acidité et/ou du petit lait.

12. Mélange alimentaire selon la revendication 11, caractérisé en ce que le mélange de base contient, en plus des composants principaux indiqués dans cette revendication (11), et chaque fois par rapport au poids, comme substance(s) minérale(s) et oligo-élément(s) au moins un, avantageusement plusieurs et en particulier la totalité des composants cités à la revendication 4 et/ou comme amino acide(s) et/ou vitamine(s) au moins un ou une, avantageusement plusieurs et en particulier la totalité des amino-acides et/ou des vitamines qui y sont cités.

13. Variante du mélange alimentaire pour l'élevage et/ou l'engraissement de porcs destiné à la fourniture de produits pour l'alimentaiton humaine, selon l'une des revendications 4 à 10, variante caractérisée en ce que le mélange contient un mélange de base, avantageusement sous forme de pastilles ou de comprimés, et qui contient, chaque fois par rapport au poids,

30 à 70 %, avantageusement 45 à 55 %, de mouture de pois alimentaire ou fourrager

10 à 30 %, avantageusement 15 à 25 %, de mouture de seigle,

5 à 25 %, avantageusement 10 à 20 %, de mouture d'orge,

1 à 12 %, avantageusement 3 à 7 %, de son de blé et/ou de seigle, et de préférence encore,

0,5 à 10%, avantageusement 3 à 7 % de farine verte de luzerne,

- et d'autres substances minérales, des oligo-éléments ou des substances fournissant des oligo-éléments, des amino-acides et/ou des vitamines,
- et, avantageusement en combinaison avec ce mélange de base, encore au moins une fois, avantageusement deux à huit fois la quantité de ce mélange de base, en des pommes de terre ouvertes ou éclatées, avantageusement cuites à la vapeur, et
- une à huit fois, avantageusement deux à 2,5 fois, la quantité du mélange du mélange de base en du lait maigre ou écrêmé épaissi par acidité et/ou en particulier du petit lait frais.

14. Variante de mélange alimentaire ou de fourrage selon la revendication 13, caractérisé en ce que le mélange de base contient, en plus les substances minérales, les oligo-éléments, les amino acides et/ou les vitamines que l'on cite à la revendication 3, et, également, 0,2 à 0,8 % en poids, avantageusement 0,4 à 0,6 % en poids, de lysine.